# EUROPÄISCHE PATENTSCHRIFT

(11) **EP 3 063 521 B1**
(45) Veröffentlichungstag und Bekanntmachung des Hinweises auf die Patenterteilung: **09.10.2019**
(21) Anmeldenummer: 14793013.5
(22) Anmeldetag: 10.10.2014
(51) Int. Cl.: G01M 13/04, F16C 19/00, G01L 1/22, G01L 5/00

(54) **VORRICHTUNG ZUR KRAFTMESSUNG IM WÄLZLAGER MITTELS SENSORSCHICHT**
DEVICE FOR MEASURING FORCE IN THE ROLLING BEARING BY MEANS OF A SENSOR LAYER
DISPOSITIF DE MESURE DE FORCE DANS UN PALIER À ROULEMENT AU MOYEN D'UNE COUCHE DE DÉTECTION

(30) Priorität: 31.10.2013 DE 102013222151
(43) Veröffentlichungstag der Anmeldung: 07.09.2016
(73) Patentinhaber: Schaeffler Technologies AG & Co. KG, 91074 Herzogenaurach (DE)
(72) Erfinder: WEIPPERT, Ralf, 97493 Bergrheinfeld (DE); HEIM, Jens, 97493 Bergrheinfeld (DE); GIERL, Jürgen, 91052 Erlangen (DE)
(86) Internationale Anmeldenummer: PCT/DE2014/200544
(87) Internationale Veröffentlichungsnummer: WO 2015/062600

(56) Entgegenhaltungen:
- WO-A1-2013/135497
- DE-A1- 10 136 438
- DE-A1- 10 250 340

## Beschreibung

### Gebiet der Erfindung

Die Erfindung betrifft eine Vorrichtung zur Kraftmessung im Wälzlager mittels einer Sensorschicht bzw. ein Messlager.

### Hintergrund der Erfindung

Aus dem Stand der Technik ist eine Vielzahl von Möglichkeiten zur Kraftmessung in Wälzlagern bekannt. Dabei kommen meist Dehnungsmessstreifen zum Einsatz, die auf die entsprechenden Bauteile appliziert werden. Ferner ist bekannt eine Sensoreinheit zur Erfassung der Dehnungen mit Hilfe von Beschichtungen umzusetzen. Dabei sind die Dehnungsmessstreifen meist offen und ungeschützt an einem Bauteil angebracht. Die Schichten werden mittels unterschiedlicher Prozesse strukturiert. Ferner ist bekannt, die Beschichtungen auf Ringe oder Scheiben im Wälzlager aufzubringen, um über Dehnungen am Lager wirkende Kräfte zu ermitteln. Um hier die notwendige Empfindlichkeit zu erreichen, werden die Bauteile an der zu messenden Stelle durch das Vorsehen von Vertiefungen, Einstiche oder Nuten geschwächt.

Nachteilig am Stand der Technik ist, dass die Langzeitstabilität von Dehnungsmessstreifen nicht gegeben ist und dass eine Nachkalibrierung erforderlich wird. Zur optimalen Kraftmessung an einem Bauteil müssen die Schichten in Schwachstellen, wie Vertiefungen, Einstiche oder Nuten, eingebracht werden, was den die Beschichtung vorbereitenden Prozessschritt und die eigentliche Applizierung erschwert. Ferner muss zur Anbringung der Schichten ein erhöhter Aufwand betrieben werden, um die Laufbahn der Wälzkörper nicht zu beschädigen. Einige Beispiele zur Kraftmessung im Wälzlager sind in den Dokumenten DE10136438 und DE10250340 beschrieben.

### Zusammenfassung der Erfindung

Es besteht somit die technische Aufgabe, ein Messlager bereitzustellen, das die Nachteile aus dem Stand der Technik überwindet und das neben seiner Fähigkeit Lasten zu übertragen auch in der Lage ist, die auftretenden Lasten zu ermitteln, ohne dass weitere Wartungen am Messlager notwendig werden.

Die Aufgabe wird erfindungsgemäß gelöst durch ein Messlager, wobei das Messlager ein Wälzlager, mindestens einen Krafteinleitungsring und einen Bauraum für mindestens eine Sensorschicht aufweist, wobei der Bauraum von dem mindestens einen Krafteinleitungsring und mindestens einem weiteren angrenzenden Bauteil des Messlagers umgeben ist, wobei das Wälzlager einen Wälzlagerkäfig, einen Außenring und einen Innenring aufweist, wobei zwischen beiden Ringen der Wälzlagerkäfig mit Wälzkörpern angeordnet ist, wobei als das mindestens eine weitere Bauteil des Messlagers der Außenring oder der Innenring vorgesehen ist, wobei
entweder der Krafteinleitungsring entlang der innenliegenden Mantelfläche des
Innenrings angeordnet ist, wobei der Bauraum vom Krafteinleitungsring und dem
Innenring umgeben ist und mindestens eine Sensorschicht auf dem Innenring oder
dem Krafteinleitungsring angeordnet ist,
oder der Krafteinleitungsring entlang der äußeren Mantelfläche des Außenrings an
geordnet ist, wobei der Bauraum vom Krafteinleitungsring und dem Außenring umgeben ist und mindestens eine Sensorschicht auf dem Außenring oder dem Krafteinleitungsring angeordnet ist, und
   wobei ein weiterer Krafteinleitungsring entlang eines Seitenrands des Außenrings angeordnet ist, wobei ein weiterer Bauraum vom weiteren Krafteinleitungsring und dem Seitenrand des Außenrings umgeben ist und mindestens eine weitere Sensorschicht auf dem Seitenrand des Außenrings oder auf dem weiteren Krafteinleitungsring angeordnet ist.
Dabei ist das Messlager eingerichtet, eine Kraftmessung im Wälzlager zur Erfassung radialer und axialer Lasten durchzuführen.

Auf diese Weise wird ein Messlager geschaffen, bei dem die Sensorschichten geschützt innerhalb des Messlagers angeordnet sind. Dabei fungiert der jeweilige Krafteinleitungsring einerseits als Teil einer Hausung für die jeweilige Sensorschicht und andererseits definiert der jeweilige Krafteinleitungsring einen Bereich im Wälzlager, in dem verstärkt Dehnungen auftreten.

Wälzlager mit derart integrierten Sensorschichten sind in der Lage, die auf das Wälzlager einwirkenden Kräfte zu ermitteln und diese an eine Auswerteeinheit weiterzugeben.

Bevorzugt sind die Wälzlager Zylinderrollenlager oder Rillenkugellager oder Kegelrollenlager oder Nadellager, insbesondere die axialen Varianten dieser Lagerungen. Besonders bevorzugt kommen die Wälzlager in Baumaschinen, Kranen, Kranflanschen, Radlagern, Radsatzlagern, Flurförderfahrzeugen, Landmaschinen oder Öl- und Gas-Fördereinrichtungen zum Einsatz.

Die Sensorschicht weist bevorzugt mindestens eine Schicht auf, die im Dünnfilmverfahren herstellbar ist. Beim Dünnfilmverfahren erfolgt die Herstellung und Bearbeitung von vorzugsweise dünnen Schichten unterschiedlicher Materialien, wie bspw. metallische, dielektrische oder halbleitende Werkstoffe. Die Dicke solcher Schichten liegt typischerweise im Bereich weniger Mikrometer bis zu wenigen Nanometern. Die Schichten sind vorzugsweise mittels unterschiedlicher Verfahren strukturierbar.

Besonders bevorzugt ist die Sensorschicht eingerichtet, bestimmte physikalische oder chemische Eigenschaften, wie z.B. Druck, Zug, Biegung oder Dehnungen, und/oder die stoffliche Beschaffenheit ihrer Umgebung qualitativ oder als Messgröße quantitativ zu erfassen. Diese Größen werden vorzugsweise mittels physikalischer oder chemischer Effekte erfasst und sind in ein weiterverarbeitbares elektrisches Signal umformbar.

Besonders bevorzugt weist die Sensorschicht Dehnungssensoren auf, um bei Zug-, Druck- oder Biegeversuchen die Dehnung zu messen. Aus den gemessenen Dehnungen können Kräfte, Momente oder Gewichtslasten berechnet werden. Diese Ergebnisse können analog oder digital ausgegeben werden.

In einer nicht erfindungsgemäßen Ausführungsform weist das Messlager eine Abdeckscheibe auf und das Wälzlager weist einen Wälzlagerkäfig, eine Gehäusescheibe und eine Wellenscheibe auf, wobei zwischen der Gehäusescheibe und der Wellenscheibe der Wälzlagerkäfig angeordnet ist, wobei als das mindestens eine weitere Bauteil die Wellenscheibe oder die Abdeckscheibe vorgesehen sind.

Auf diese Weise ist eine sich am Wälzlager einstellende Dehnung, infolge einer Krafteinwirkung auf das Wälzlager, von der Sensorschicht aufnehmbar, messbar und anschließend auswertbar.

Bevorzugt ist in dieser nicht erfindungsgemäßen Ausführungsform der Krafteinleitungsring fest mit der Abdeckscheibe oder der Wellenscheibe verbunden. Vorzugsweise erfolgt die feste Verbindung mittels Schweißen, Kleben, Löten, Verschrauben, Vernieten, Verklinken oder Verstemmen.

Diese feste Verbindung verhindert Mikrobewegungen und führt zu einer annähernd hysteresefreien Dehnungsmessung, da nahezu keine Mikrobewegungen an der festen Verbindung auftreten.

Bevorzugt kann das mit der Sensorschicht versehene Bauteil mittels einer Spiel-oder Übergangsanpassung montiert werden, ohne dass sich dies nachteilig auf das Messsignal auswirkt.

In einer weiteren nicht erfindungsgemäßen Ausführungsform ist der Bauraum von der Wellenscheibe, dem Krafteinleitungsring und einem zweiten Krafteinleitungsring und der Abdeckscheibe umgeben, wobei mindestens eine Sensorschicht auf der Abdeckscheibe oder der Wellenscheibe angeordnet ist.

Auf diese Weise lässt sich eine Dehnungsaufnahme mittels der Sensorschicht bewerkstelligen. Ferner ist ein Schutz der Sensorschicht im Inneren des Messlagers gegeben.

Bevorzug ist in der nicht erfindungsgemäßen Ausführungsform die Abdeckscheibe oder die Wellenscheibe mit der Sensorschicht beschichtet, d.h. die Sensorschicht ist auf der Abdeckscheibe oder der Wellenscheibe appliziert. Damit kann eine Dehnung entlang der Abdeckscheibe oder der Wellenscheibe mittels der Sensorschicht erfasst und anschließend ausgewertet werden.

In einer weiteren nicht erfindungsgemäßen Ausführungsform ist der Bauraum von zwei Abdeckscheiben und dem Krafteinleitungsring und einem zweiten Krafteinleitungsring umgeben, wobei mindestens eine Sensorschicht auf mindestens einer Abdeckscheibe angeordnet ist.

Auf diese Weise ist eine alternative Ausführungsform zur Dehnungsaufnahme mittels der Sensorschicht gegeben. Ferner ist auch ein Schutz der Sensorschicht im Inneren des Messlagers gegeben.

Bevorzug ist in der nicht erfindungsgemäßen Ausführungsform die mindestens eine Abdeckscheibe mit der Sensorschicht beschichtet, d.h. die Sensorschicht ist auf der Abdeckscheibe appliziert. Damit kann eine Dehnung entlang der mindestens einer Abdeckscheibe mittels der Sensorschicht erfasst und anschließend ausgewertet werden.

In einer weiteren nicht erfindungsgemäßen Ausführungsform ist der Bauraum von der Abdeckscheibe und dem Krafteinleitungsring umgeben, wobei der Krafteinleitungsring einen U-förmigen Querschnitt aufweist und mindestens eine Sensorschicht auf der Abdeckscheibe oder dem Krafteinleitungsring angeordnet ist.

Auf diese Weise ist eine weitere alternative Ausführungsform zur Dehnungsaufnahme mittels der Sensorschicht gegeben. Ferner ist auch ein Schutz der Sensorschicht im Inneren des Messlagers gegeben.

Bevorzug ist in einer nicht erfindungsgemäßen Ausführungsform die Abdeckscheibe mit der Sensorschicht beschichtet, d.h. die Sensorschicht ist auf der Abdeckscheibe appliziert. Damit kann eine Dehnung entlang der Abdeckscheibe mittels der Sensorschicht erfasst und anschließend ausgewertet werden. Durch das Vorsehen des Krafteinleitungsrings mit einem U-förmigen Querschnitt ist keine zweite Abdeckscheibe mehr notwendig.

Gemäß der vorliegenden Erfindung weist das Wälzlager einen Wälzlagerkäfig, einen Außenring und einen Innenring auf, wobei zwischen beiden Ringen der Wälzlagerkäfig mit Wälzkörpern angeordnet ist, wobei als das mindestens eine weitere Bauteil des Messlagers der Außenring oder der Innenringvorgesehen ist.

Auf diese Weise ist eine sich am Wälzlager einstellende Dehnung, infolge einer Krafteinwirkung auf das Wälzlager, von der Sensorschicht aufnehmbar, messbar und anschließend auswertbar.

Dabei ist der Krafteinleitungsring erfindungsgemäß entweder entlang der innenliegenden Mantelfläche des Innenrings angeordnet, wobei der Bauraum vom Krafteinleitungsring und dem Innenring umgeben ist und mindestens eine Sensorschicht auf dem Innenring oder dem Krafteinleitungsring angeordnet ist.

Auf diese Weise lässt sich eine Dehnungsaufnahme mittels der Sensorschicht bewerkstelligen. Ferner ist ein Schutz der Sensorschicht im Inneren des Messlagers gegeben. Vorzugsweise ist der Krafteinleitungsring maßgeblich zur Erfassung radialer Lasten geeignet.

Bevorzugt ist dabei der Innenring mit der Sensorschicht beschichtet, d.h. die Sensorschicht ist auf dem Innenring appliziert. Damit kann eine Dehnung entlang des Innenrings mittels der Sensorschicht erfasst und anschließend ausgewertet werden.

Alternativ ist der Krafteinleitungsring erfindungsgemäß entlang der äußeren Mantelfläche des Außenrings angeordnet, wobei der Bauraum vom Krafteinleitungsring und dem Außenring umgeben ist und mindestens eine Sensorschicht auf dem Außenring oder dem Krafteinleitungsring angeordnet ist.

Auf diese Weise ist eine alternative Ausführungsform zur Dehnungsaufnahme mittels der Sensorschicht gegeben. Ferner ist auch ein Schutz der Sensorschicht im Inneren des Messlagers gegeben. Vorzugsweise ist der Krafteinleitungsring maßgeblich zur Erfassung radialer Lasten geeignet.

Bevorzugt ist der Außenring mit der Sensorschicht beschichtet, d.h. die Sensorschicht ist auf dem Außenring appliziert. Damit kann eine Dehnung entlang des Außenrings mittels der Sensorschicht erfasst und anschließend ausgewertet werden.

Erfindungsgemäß ist ein weiterer Krafteinleitungsring entlang eines Seitenrands des Außenrings angeordnet, wobei ein weiterer Bauraum vom weiteren Krafteinleitungsring und dem Seitenrand des Außenrings umgeben ist und mindestens eine weitere Sensorschicht auf dem Seitenrand des Außenrings oder auf dem weiteren Krafteinleitungsring angeordnet ist.

Vorzugsweise ist der weitere Krafteinleitungsring maßgeblich zur Erfassung axialer Lasten geeignet.

Bevorzug ist der Seitenrand die Stirnseite des Außenrings. Besonders bevorzugt ist der Seitenrand mit der weiteren Sensorschicht beschichtet, d.h. die weitere Sensorschicht ist darauf appliziert. Auf diese Weise ist eine Aufnahme und Messung von Dehnungen möglich, die sich in axialer Richtung zum Wälzlager einstellen.

Bevorzugt ist das Wälzlager als Rillenkugellager ausgeführt.

Bevorzugt kann eine Sensorschicht mittels einer Spiel- oder Übergangsanpassung montiert werden, ohne dass sich dies nachteilig auf das Messsignal auswirkt.

In einer weiteren erfindungsgemäßen Ausführungsform ist ein Kanal in einem vorhandenen Krafteinleitungsring vorgesehen, wobei der Kanal eingerichtet ist, Sensorleitungen, die mit mindestens einer der Sensorschichten verbunden sind, vom Bauraum aus dem Messlager zu einer Auswerteeinheit zu führen.

Auf diese Weise ist eine einfache Möglichkeit geschaffen, die Sensorleitungen aus dem Kanal des Krafteinleitungsrings herauszuführen.

Bevorzugt ist die Auswerteeinheit eingerichtet, die von der Sensorschicht aufgenommen Messwerte zu verarbeiten und auszuwerten.

In einer weiteren erfindungsgemäßen Ausführungsformist der Kanal ausgelegt, ein Element zur Verdrehsicherung aufzunehmen, das in den Kanal eingreift. Eine Verdrehung zwischen dem Abdeckscheibe und der Gehäusescheibe bzw. zwischen einem dieser Bauteile und dem Gehäuse soll vermieden werden.

### Kurze Beschreibung der Zeichnung

Die Erfindung wird nun beispielhaft durch Figuren veranschaulicht, dabei zeigt
Fig. 1 eine schematische Ansicht eines Schnitts durch ein nicht erfindungsgemäßes
   Messlager,
Fig. 2 eine schematische Ansicht eines Schnitts durch eine Kammer des Messlagers aus Fig. 1,
Fig. 3 eine schematische Ansicht eines Schnitts durch eine weitere alternative Kammer des Messlagers aus Fig. 1,
Fig. 4 eine schematische Ansicht eines Schnitts durch eine weitere alternative Kammer des Messlagers aus Fig. 1,
Fig. 5 eine schematische Ansicht eines Schnitts durch ein weiteres nicht erfindungsgemäßes Messlager und
Fig. 6 eine schematische Ansicht eines Schnitts durch ein weiteres alternatives Messlager aus Fig. 5 und
Fig. 7 eine schematische Ansicht eines Schnitts durch ein erfindungsgemäßes Messlager ausgehend von der Bauart gemäß Fig. 5.

### Ausführliche Beschreibung der Zeichnung

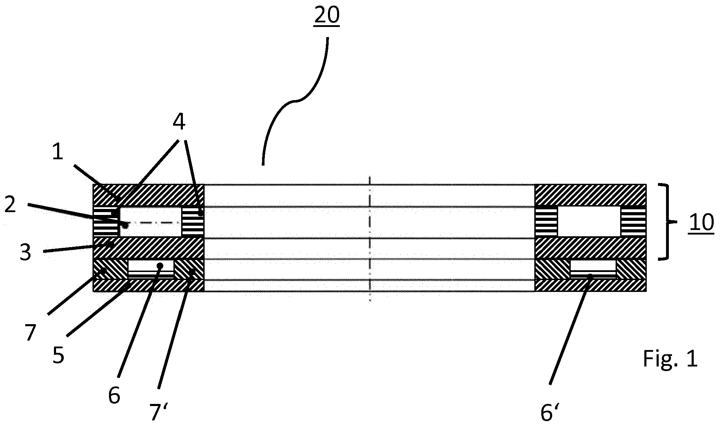

In **Fig. 1** ist eine schematische Ansicht eines Schnitts durch ein nicht erfindungsgemäßes Messlager dargestellt.

Das Messlager 20 weist ein Wälzlager 10 auf. Das Wälzlager 10 ist als Axial-Zylinderrollenlager ausgebildet. Das Wälzlager 10 weist eine Gehäusescheibe 1, Wälzkörper 2, eine Wellenscheibe 3 und einen Wälzlagerkäfig 4 auf. Die Gehäusescheibe 1, die Wälzkörper 2, die Wellenscheibe 3 und der Wälzlagerkäfig 4 bilden das Wälzlager 10. Die Wälzkörper 2 sind im Wälzlagerkäfig 4 drehbar gelagert. Der Wälzlagerkäfig 4 und die Wälzkörper 2 sind von der Gehäusescheibe 1 und der Wellenscheibe 3 begrenzt.

Ferner weist das Messlager 20 eine Kammer auf. Die Kammer weist eine Abdeckscheibe 5, einen Bauraum 6 für mehrere Sensorschichten 6' und zwei Krafteinleitungsringe 7 und 7' auf. Der Bauraum 6 für die Sensorschichten 6' ist zwischen der Wellenscheibe 3 und der Abdeckscheibe 5 angeordnet und wird beidseitig von den Krafteinleitungsringen 7 und 7' begrenzt.

Die Sensorschichten 6' sind auf der Abdeckscheibe 5 im Bauraum 6 aufgebracht.

Nach erfolgtem Einbau des Messlagers 20 in eine Vorrichtung wird die Last über die Krafteinleitungsringe in die Wellenscheibe eingeleitet. Infolge dieser Last treten Dehnungen in der Kammer, insbesondere im Bauraum 6 und an den Krafteinleitungsringen 7 und 7' sowie dem Wellenring 3 auf. Diese Dehnungen können jetzt mittels den Sensorschichten 6' erfasst werden und mittels Sensorleitungen, die in einem Kanal im Krafteinleitungsring 7 vorgesehen sind, zur Auswertung an eine entsprechende Vorrichtung übermittelt werden (nicht dargestellt).

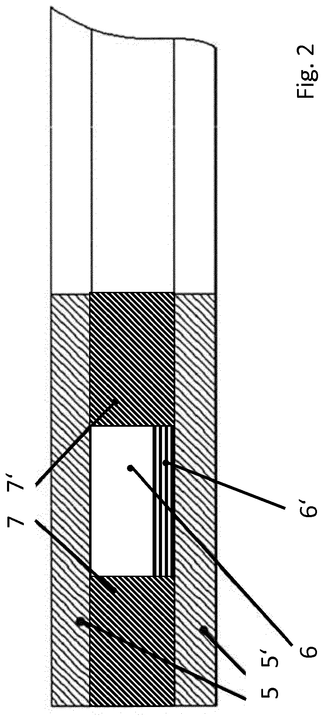

In **Fig. 2** ist eine schematische Ansicht eines Schnitts durch eine Kammer des Messlagers aus Fig. 1 dargestellt.

Das Wälzlager (nicht dargestellt) kann denselben Aufbau aufweisen, wie bereits unter Fig. 1 beschrieben.

An dem Wälzlager schließt die Kammer an. Die Kammer weist zwei Abdeckscheiben 5 und 5', einen Bauraum 6 für die Sensorschichten 6' und zwei Krafteinleitungsringen 7 und 7' auf. Der Bauraum 6 für die Sensorschichten 6' ist zwischen den zwei Abdeckscheiben 5 und 5' angeordnet und wird beidseitig von den Krafteinleitungsringen 7 und 7' begrenzt.

Der Bauraum 6 weist eine oder mehrere Sensorschichten 6' auf. Die Sensorschichten 6' sind auf der von dem Gehäuse entferntesten unteren Abdeckscheibe 5 im Bauraum 6 aufgebracht, können aber auch auf der gegenüberliegenden Abdeckscheibe angebracht sein.

Nach erfolgtem Einbau des Messlagers 20 in eine Vorrichtung werden Lasten über die Wände der Kammer geleitet. Infolge dieser Lasten treten Dehnungen in der Kammer, insbesondere im Bauraum 6 und an den Krafteinleitungsringen 7 und 7' auf. Diese Dehnungen können jetzt mittels den Sensorschichten 6' erfasst werden.

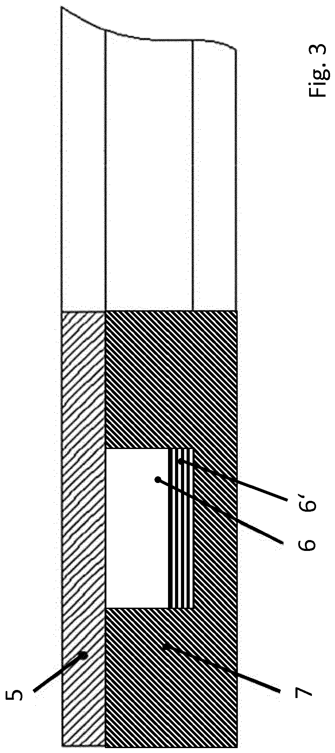

In **Fig. 3** ist eine schematische Ansicht eines Schnitts durch eine weitere alternative Kammer des Messlagers aus Fig. 1 dargestellt.

Das Wälzlager (nicht dargestellt) kann denselben Aufbau aufweisen, wie bereits unter Fig. 1 beschrieben.

An dem Wälzlager schließt die Kammer an. Die Kammer weist eine Abdeckscheibe 5, einen Bauraum 6 für die Sensorschichten 6' und einen Krafteinleitungsring 7 mit einem U-förmigen Querschnitt auf. Der Bauraum 6 für die Sensorschichten 6' ist zwischen der Abdeckscheibe 5 und dem Krafteinleitungsring 7 angeordnet.

Der Bauraum 6 weist mehrere Sensorschichten 6' auf. Die Sensorschichten 6' sind auf der Abdeckscheibe 5 im Bauraum 6 aufgebracht, können aber auch auf der Abdeckscheibe 5 angebracht sein.

Dabei kann die Kammer so zum Wälzlager 10 positioniert werden, dass entweder die Abdeckscheibe 5 oder der Krafteinleitungsring 7 zum Wälzlager 10 zeigen.

Nach erfolgtem Einbau des Messlagers 20 in eine Vorrichtung drückt das Wälzlager 10 auf die Kammer. Infolge dieses Druckes treten Dehnungen in der Kammer, insbesondere im Bauraum 6 und an dem Krafteinleitungsring 7 bzw. der Abdeckscheibe 5 auf. Diese Dehnungen können jetzt mittels den Sensorschichten 6' erfasst werden.

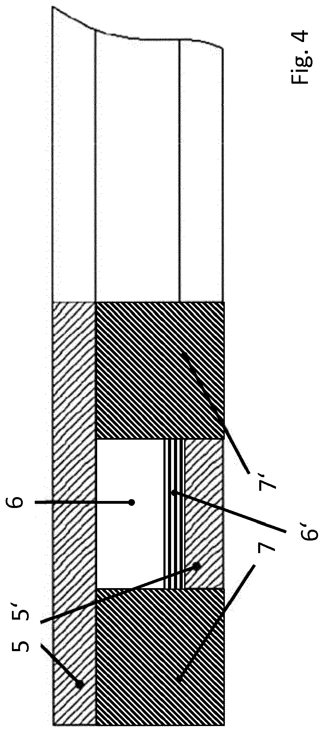

In **Fig. 4** ist eine schematische Ansicht eines Schnitts durch eine weitere alternative Kammer des Messlagers aus Fig. 1 dargestellt.

Das Wälzlager (nicht dargestellt) kann denselben Aufbau aufweisen, wie bereits unter Fig. 1 beschrieben.

An das Wälzlager schließt die Kammer an. Die Kammer weist zwei Abdeckscheiben 5 und 5', einen Bauraum 6 für die Sensorschichten 6' und zwei Krafteinleitungsringe 7 und 7' auf. Der Bauraum 6 für die Sensorschichten 6' ist zwischen den zwei Abdeckscheiben 5 und 5' angeordnet und wird beidseitig von den Krafteinleitungsringen 7 und 7' begrenzt. Die untere Abdeckscheibe 5 ist kürzer ausgebildet als die obere Abdeckscheibe 5'.

Der Bauraum 6 weist eine oder mehrere Sensorschichten 6' auf. Die Sensorschichten 6' sind auf einer der Abdeckscheiben 5 oder 5' im Bauraum 6 für die Sensorschichten 6'aufgebracht. Dabei kann die Kammer so zum Wälzlager 10 positioniert werden, dass entweder die Abdeckscheibe 5 oder 5' zum Wälzlager 10 zeigen.

Nach erfolgtem Einbau des Messlagers 20 in eine Vorrichtung drückt das Wälzlager 10 auf die Kammer. Infolge dieses Druckes treten Dehnungen in der Kammer, insbesondere im Bauraum 6 und an den Krafteinleitungsringen 7 und 7' auf. Diese Dehnungen können jetzt mittels der Sensorschichten 6' erfasst werden.

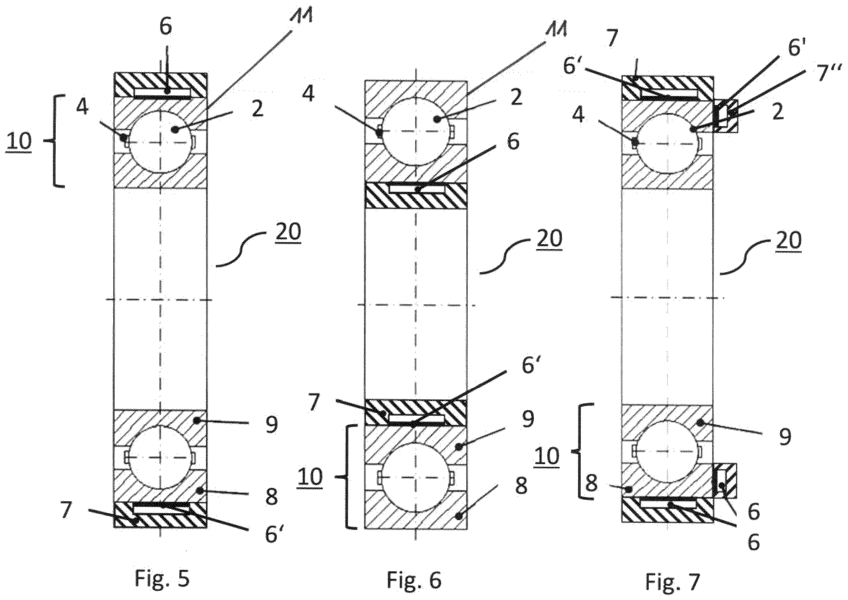

In **Fig. 5** ist eine schematische Ansicht eines Schnitts durch ein weiteres nicht erfindungsgemäßes Messlager dargestellt.

Das Messlager 20 weist ein Wälzlager 10 auf. Das Wälzlager 10 ist als Rillenkugellager ausgebildet. Das Wälzlager 10 weist Wälzkörper 2, einen Wälzlagerkäfig 4, einen Außenring 8 und einen Innenring 9 auf.

Der Außenring 8, der Innenring 9, der Wälzlagerkäfig 4 und die Wälzkörper 2 bilden das Wälzlager 10. Die Wälzkörper 2 sind im Wälzlagerkäfig 4 drehbar gelagert. Der Außenring 8 und der Innenring 9 begrenzen den Wälzlagerkäfig 4 und die Wälzkörper 2.

An dem Wälzlager 10 schließt eine Kammer an, die auf der äußeren Mantelfläche des Außenrings 8 angeordnet ist. Die Kammer weist den Bauraum 6 für die Sensorschichten 6' und einen Krafteinleitungsring 7 mit einem U-förmigen Querschnitt auf. Der Bauraum 6 für die Sensorschichten 6' ist zwischen dem Außenring 8 und dem Krafteinleitungsring 7 angeordnet.

Der Bauraum 6 weist eine oder mehrere Sensorschichten 6' auf. Die Sensorschichten 6' sind auf dem Außenring 8 oder auf dem Krafteinleitungsring 7 im Bauraum 6 aufgebracht.

Nach erfolgtem Einbau des Messlagers 20 in eine Vorrichtung drückt das Wälzlager 10 auf die Kammer. Infolge dieses Druckes treten Dehnungen in der Kammer, insbesondere im Bauraum 6 und am Krafteinleitungsring 7 auf. Diese Dehnungen können jetzt mittels der Sensorschichten 6' erfasst werden und mittels Sensorleitungen, die in einem Kanal im Krafteinleitungsring 7 vorgesehen sind, zur Auswertung an eine entsprechende Vorrichtung übermittelt werden (nicht dargestellt).

In **Fig. 6** ist eine schematische Ansicht eines Schnitts durch ein weiteres alternatives Messlager aus Fig. 5 dargestellt.

Das Messlager 20 weist ein Wälzlager 10 auf. Das Wälzlager 10 ist als Rillenkugellager ausgebildet. Das Wälzlager 10 weist Wälzkörper 2, einen Wälzlagerkäfig 4, einen Außenring 8 und einen Innenring 9 auf.

Der Außenring 8, der Innenring 9, das Wälzlagerkäfig 4 und die Wälzkörper 2 bilden das Wälzlager 10. Die Wälzkörper 2 sind im Wälzlagerkäfig 4 drehbar gelagert. Der Außenring 8 und der Innenring 9 begrenzen den Wälzlagerkäfig 4 und die Wälzkörper 2.

An dem Wälzlager 10 schließt eine Kammer an, die auf der innenliegenden Mantelfläche des Innenrings 9 angeordnet ist. Die Kammer weist den Bauraum 6 für die Sensorschichten 6' und einen Krafteinleitungsring 7 mit einem U-förmigen Querschnitt auf. Der Bauraum 6 für die Sensorschichten 6' ist zwischen dem Außenring 8 und dem Krafteinleitungsring 7 angeordnet.

Der Bauraum 6 weist eine oder mehrere Sensorschichten 6' auf. Die Sensorschichten 6' sind auf dem Außenring 8 oder dem Krafteinleitungsring 7 im Bauraum 6 aufgebracht.

Nach erfolgtem Einbau des Messlagers 20 in eine Vorrichtung drückt das Wälzlager 10 auf die Kammer. Infolge dieses Druckes treten Dehnungen in der Kammer, insbesondere im Bauraum 6 und am Krafteinleitungsring 7 auf. Diese Dehnungen können jetzt mittels den Sensorschichten 6' erfasst werden.

In **Fig. 7** ist eine schematische Ansicht eines Schnitts durch ein erfindungsgemäßes Messlager ausgehend von der Bauart gemäß Fig. 5 dargestellt.

Im Unterschied zur Fig. 5 ist in der Fig. 7 eine zusätzliche Kammer vorgesehen. Die Kammer erstreckt sich entlang des kreisrunden rechten Seitenrands des Außenrings 8, also entlang der rechten Stirnseite 11 des Außenrings 8 (vergleiche Fig. 5).

Die Kammer weist einen weiteren Bauraum 6 für die Sensorschichten 6'und einen weiteren Krafteinleitungsring 7" mit einem U-förmigen Querschnitt auf. Der weitere Bauraum 6 für die Sensorschichten 6' ist zwischen dem Außenring 8 und dem weiteren Krafteinleitungsring 7" angeordnet.

Der jeweilige Bauraum 6 weist eine oder mehrere Sensorschichten 6' auf. Die Sensorschichten 6' sind auf dem Außenring 8 oder den Krafteinleitungringen 7, 7" im Bauraum 6 appliziert.

Nach erfolgtem Einbau des Messlagers 20 in eine Vorrichtung drückt das Wälzlager 10 auch auf die zusätzliche Kammer. Infolge dieses Druckes treten Dehnungen in den Kammern, insbesondere im jeweiligen Bauraum 6 und am jeweiligen Krafteinleitungsring 7, 7" auf. Diese Dehnungen können jetzt mittels den Sensorschichten 6' erfasst werden. Der Krafteinleitungsring 7 ist maßgeblich zur Erfassung radialer Lasten geeignet. Der Krafteinleitungsring 7" ist maßgeblich zur Erfassung axialer Lasten geeignet.

Auf diese Weise lässt sich ein Messlager 20 mit einem Wälzlager 10 schaffen, bei dem die Sensorschichten geschützt innerhalb des Messlagers 20 angeordnet sind und das neben seiner Fähigkeit Lasten zu übertragen auch in der Lage ist, die auftretenden Lasten zu ermitteln, ohne dass weitere Wartungen am Wälzlager 10 notwendig werden und Kosten eingespart werden können.

Mit dem Messalager 20 wird die Qualität und Funktionalität erhöht, sowie die Sicherheit von Anlagen und Maschinen verbessert.

### Bezugszahlenliste

- 1: Gehäusescheibe
- 2: Wälzkörper
- 3: Wellenscheibe
- 4: Wälzlagerkäfig
- 5: Abdeckscheibe
- 5': Abdeckscheibe
- 6: Bauraum
- 6': Sensorschicht
- 7: Krafteinleitungsring
- 7': Krafteinleitungsring
- 7": Krafteinleitungsring
- 8: Außenring
- 9: Innenring
- 10: Wälzlager
- 11: Seitenrand (Stirnseite des Außenrings)
- 20: Messlager

## Patentansprüche

1. Messlager (20), wobei das Messlager (20) ein Wälzlager (10), mindestens einen Krafteinleitungsring (7) und einen Bauraum (6) für mindestens eine Sensorschicht (6') aufweist, wobei der Bauraum (6) von dem mindestens einen Krafteinleitungsring (7) und mindestens einem weiteren angrenzenden Bauteil (8, 9) des Messlagers (20) umgeben ist, wobei das Wälzlager (10) einen Wälzlagerkäfig (4), einen Außenring (8) und einen Innenring (9) aufweist, wobei zwischen beiden Ringen (8, 9) der Wälzlagerkäfig (4) mit Wälzkörpern (2) angeordnet ist, wobei als das mindestens eine weitere Bauteil (8, 9) des Messlagers (20) der Außenring (8) oder der Innenring (9) vorgesehen ist, wobei
entweder der Krafteinleitungsring (7) entlang der innenliegenden Mantelfläche des Innenrings (9) angeordnet ist, wobei der Bauraum (6) vom Krafteinleitungsring (7) und dem Innenring (9) umgeben ist und mindestens eine Sensorschicht (6') auf dem Innenring (9) oder dem Krafteinleitungsring (7) angeordnet ist,
oder der Krafteinleitungsring (7) entlang der äußeren Mantelfläche des Außenrings (8) angeordnet ist, wobei der Bauraum (6) vom Krafteinleitungsring (7) und dem Außenring (8) umgeben ist und mindestens eine Sensorschicht (6') auf dem Außenring (8) oder dem Krafteinleitungsring (7) angeordnet ist, und
**dadurch gekennzeichnet dass** ein weiterer Krafteinleitungsring (7") entlang eines Seitenrands (11) des Außenrings (8) angeordnet ist, wobei ein weiterer Bauraum (6) vom weiteren Krafteinleitungsring (7") und dem Seitenrand (11) des Außenrings (8) umgeben ist und mindestens eine weitere Sensorschicht (6') auf dem Seitenrand (11) des Außenrings (8) oder auf dem weiteren Krafteinleitungsring (7") angeordnet ist.

2. Messlager (20) gemäß Anspruch 1, wobei ein Kanal in einem vorhandenen Krafteinleitungsring (7, 7") vorgesehen ist, wobei der Kanal eingerichtet ist, Sensorleitungen, die mit mindestens einer der Sensorschichten (6') verbunden sind, aus dem Messlager (20) zu einer Auswerteeinheit zu führen.

3. Messlager (20) gemäß Anspruch 2, wobei der Kanal ausgelegt ist, ein Element zur Verdrehsicherung aufzunehmen, das in den Kanal eingreift.

4. Messlager (20) nach einem der Ansprüche 1 bis 3, wobei die Sensorschicht (6') mindestens eine Schicht in Form eines Dünnfilms aufweist.

## Claims

1. Measuring bearing (20), wherein the measuring bearing (20) has a rolling bearing (10), at least one force introduction ring (7) and a construction space (6) for at least one sensor layer (6'), wherein the construction space (6) is surrounded by the at least one force introduction ring (7) and at least one further adjacent component (8, 9) of the measuring bearing (20), wherein the rolling bearing (10) has a rolling bearing cage (4), an outer ring (8) and an inner ring (9), wherein the rolling bearing cage (4) with rolling bodies (2) is arranged between the two rings (8, 9), wherein the outer ring (8) or the inner ring (9) is provided as the at least one further component (8, 9) of the measuring bearing (20), wherein
either the force introduction ring (7) is arranged along the inner circumferential surface of the inner ring (9), wherein the construction space (6) is surrounded by the force introduction ring (7) and the inner ring (9) and at least one sensor layer (6') is arranged on the inner ring (9) or the force introduction ring (7),
or the force introduction ring (7) is arranged along the outer circumferential surface of the outer ring (8), wherein the construction space (6) is surrounded by the force introduction ring (7) and the outer ring (8), and at least one sensor layer (6') is arranged on the outer ring (8) or the force introduction ring (7), and
**characterized in that** a further force introduction ring (7") is arranged along a side edge (11) of the outer ring (8), wherein a further construction space (6) is surrounded by the further force introduction ring (7") and the side edge (11) of the outer ring (8) and at least one further sensor layer (6') is arranged on the side edge (11) of the outer ring (8) or on the further force introduction ring (7").

2. Measuring bearing (20) according to Claim 1, wherein a channel is provided in a force introduction ring (7, 7") which is present, wherein the channel is configured to guide sensor lines, which are connected to at least one of the sensor layers (6'), from the measuring bearing (20) to an evaluation unit.

3. Measuring bearing (20) according to Claim 2, wherein the channel is configured to receive an element for protecting against twisting, said element engaging in the channel.

4. Measuring bearing (20) according to one of Claims 1 to 3, wherein the sensor layer (6') has at least one layer in the form of a thin film.

## Revendications

1. Palier de mesure (20), le palier de mesure (20) possédant un palier de roulement (10), au moins une bague d'introduction de force (7) et un espace de montage (6) pour au moins une couche formant capteur (6'), l'espace de montage (6) étant entouré par l'au moins une bague d'introduction de force (7) et au moins un élément structural (8, 9) adjacent supplémentaire du palier de mesure (20), le palier de roulement (10) possédant une cage de roulement (4), une bague extérieure (8) et une bague intérieure (9), la cage de roulement (4) avec des organes de roulement (2) étant disposée entre les deux bagues (8, 9), l'au moins un élément structural (8, 9) supplémentaire présent du palier de mesure (20) étant la bague extérieure (8) ou la bague intérieure (9), dans lequel
soit la bague d'introduction de force (7) est disposée le long de l'enveloppe interne de la bague intérieure (9), l'espace de montage (6) étant entouré par la bague d'introduction de force (7) et la bague intérieure (9) et au moins une couche formant capteur (6') étant disposée sur la bague intérieure (9) ou sur la bague d'introduction de force (7),
soit la bague d'introduction de force (7) est disposée le long de l'enveloppe externe de la bague extérieure (8), l'espace de montage (6) étant entouré par la bague d'introduction de force (7) et la bague extérieure (8) et au moins une couche formant capteur (6') étant disposée sur la bague extérieure (8) ou sur la bague d'introduction de force (7),
**caractérisé en ce que**
une bague d'introduction de force supplémentaire (7") est disposée le long d'une paroi latérale (11) de la bague extérieure (8), un espace de montage (6) supplémentaire étant entouré par la bague d'introduction de force supplémentaire (7") et la paroi latérale (11) de la bague extérieure (8) et au moins une couche formant capteur (6') supplémentaire étant disposée sur la paroi latérale (11) de la bague extérieure (8) ou sur la bague d'introduction de force supplémentaire (7").

2. Palier de mesure (20) selon la revendication 1, un canal étant présent dans une bague d'introduction de force (7, 7") existante, le canal étant conçu pour amener des lignes de capteur, lesquelles sont reliées à au moins l'une des couches formant capteur (6'), du palier de mesure (20) à une unité d'interprétation.

3. Palier de mesure (20) selon la revendication 2, le canal étant conçu pour accueillir un élément de blocage anti-torsion qui vient en prise dans le canal.

4. Palier de mesure (20) selon l'une des revendications 1 à 3, la couche formant capteur (6') possédant au moins une couche sous la forme d'un film mince.
